# EUROPEAN PATENT APPLICATION

(11) **EP 4 503 737 A1**
(43) Date of publication of application: **05.02.2025**
(21) Application number: 24172670.2
(22) Date of filing: 26.04.2024
(51) Int. Cl.: H04W 36/00, H04W 76/15

(54) **NETWORK SLICE SUPPORT INDICATION TO ASSIST PRIMARY SECONDARY CELL CHANGES**

(30) Priority: 04.08.2023 GB 202311960
(71) Applicant: Nokia Technologies Oy, 02610 Espoo (FI)
(72) Inventor: ELMALI, Ugur Baran, Munich (DE); NASEER-ULISLAM, Muhammad, Munich (DE); KORDYBACH, Krzysztof, Wroclaw (PL); PAPA, Arled, Munich (DE); BULAKCI, Ömer, Munich (DE); AWADA, Ahmad, Munich (DE)
(74) Representative: Bryers Intellectual Property Ltd

(57) **Abstract**

A master node is provided for a user equipment operating in dual-connectivity with the master node and a secondary node. The master node may be configured to receive information that indicates supported network slices of one or more further nodes. The master node may be configured to transmit slice support information for the one or more further nodes, based on the information. The slice support information may indicate one or more of the supported network slices, at least one non-supported network slice of the one or more further nodes, or at least one communication session of the user equipment that is associated with at least one non-supported network slice. The secondary node may receive the slice support information, and make a secondary node change determination at the secondary node, based on the slice support information.

## Description

### TECHNOLOGICAL FIELD

The present disclosure relates generally to telecommunications and, in particular, to dual connectivity of a user equipment in a telecommunications system.

### BACKGROUND

A telecommunications system can be seen as a facility that enables communication sessions between two or more entities such as user terminals, base stations and/or other nodes by providing carriers between the various entities involved in the communications path. A telecommunications system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless telecommunications system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the telecommunications system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The telecommunications system and associated devices typically operate in accordance with a given standard or specification which sets out what the various entities associated with the system are permitted to do and how that should be achieved. Communication protocols and/or parameters which shall be used for the connection are also typically defined. One example of a telecommunications system is the Universal Mobile Telecommunications System (UMTS). Other examples of telecommunications systems are Long-Term Evolution (LTE), LTE Advanced and the so-called 5G or New Radio (NR) networks. NR is being standardized by the 3rd Generation Partnership Project (3GPP).

### BRIEF SUMMARY

Example implementations of the present disclosure are directed to telecommunications and, in particular, to dual connectivity of a user equipment in a telecommunications system in which the user equipment may be connected to a master node and a secondary node. In this regard, the present disclosure includes, without limitation, the following example implementations.

Some example implementations provide an apparatus comprising: at least one memory configured to store computer-readable program code to implement a master node for a user equipment operating in dual-connectivity with the master node and a secondary node; and at least one processing circuitry configured to access the at least one memory, and execute the computer-readable program code to cause the apparatus to at least: receive information that indicates supported network slices of one or more further nodes; and transmit slice support information for the one or more further nodes, to the secondary node, based on the information.

Some example implementations provide an apparatus comprising: means for receiving, at a master node for a user equipment operating in dual-connectivity with the master node and a secondary node, information that indicates supported network slices of one or more further nodes; and means for transmitting slice support information for the one or more further nodes, from the master node to the secondary node, based on the information.

Some example implementations provide an apparatus comprising: at least one memory configured to store computer-readable program code to implement a secondary node for a user equipment operating in dual-connectivity with a master node and the secondary node; and at least one processing circuitry configured to access the at least one memory, and execute the computer-readable program code to cause the apparatus to at least: receive, from the master node, slice support information for one or more further nodes; and make a secondary node change determination at the secondary node, based on the slice support information.

Some example implementations provide an apparatus comprising: means for receiving, at a secondary node from a master node for a user equipment operating in dual-connectivity with the master node and the secondary node, slice support information for one or more further nodes; and means for making a secondary node change determination at the secondary node, based on the slice support information.

Some example implementations provide a method comprising: receiving, at a master node for a user equipment operating in dual-connectivity with the master node and a secondary node, information that indicates supported network slices of one or more further nodes; and transmitting slice support information for the one or more further nodes, from the master node to the secondary node, based on the information.

Some example implementations provide a method comprising: receiving, at a secondary node from a master node for a user equipment operating in dual-connectivity with the master node and the secondary node, slice support information for one or more further nodes; and making a secondary node change determination at the secondary node, based on the slice support information.

A first aspect of the present disclosure provides an apparatus comprising: at least one memory configured to store computer-readable program code to implement a master node for a user equipment operating in dual-connectivity with the master node and a secondary node; and at least one processing circuitry configured to access the at least one memory, and execute the computer-readable program code to cause the apparatus to at least: receive information that indicates supported network slices of one or more further nodes; and transmit slice support information for the one or more further nodes, to the secondary node, based on the information.

In an implementation of the first aspect, the slice support information can identify the supported slices of the one or more further nodes. The at least one processing circuitry can be configured to execute the computer-readable program code to cause the apparatus to further determine at least one communication session of the user equipment that is associated with at least one non-supported network slice of the one or more further nodes, based on the supported network slices, and wherein the slice support information can identify at least one of the at least one communication session or the at least one non-supported network slice. The secondary node can be a source secondary node of a secondary node change procedure in which the one or more further nodes can include one or more target secondary nodes, and wherein the at least one processing circuitry can be configured to execute the computer-readable program code to cause the apparatus to further, during the secondary node change procedure: receive, from the source secondary node, a secondary node change required message that identifies the one or more target secondary nodes; and determine at least one communication session of the user equipment that is associated with at least one non-supported network slice of the one or more target secondary nodes, based on the supported network slices, and wherein the apparatus caused to transmit the slice support information can include the apparatus caused to transmit a secondary node change confirm message or a secondary node change refuse message that can include the slice support information, and the slice support information can identify at least one of the at least one communication session or the at least one non-supported network slice. The secondary node change confirm message can be transmitted, and the secondary node change confirm message can further indicate at least one of a cause of rejection of the at least one communication session by the one or more target secondary nodes, or an action taken by the apparatus for the at least one communication session. The supported network slices of the one or more further nodes can be the supported network slices of a tracking area of a cell served by the one or more further nodes, and the slice support information can indicate the supported network slices. The at least one processing circuitry can be configured to execute the computer-readable program code to cause the apparatus to further at least: receive, from the secondary node, a network interface setup request message that includes neighbor cell information indicating tracking areas of neighboring cells of one or more cells served by the secondary node; make a first determination that the secondary node is unaware of the tracking area, and thereby unaware of the supported network slices of the one or more further nodes; and make a second determination that the one or more further nodes is a neighbor of the secondary node, and wherein the slice support information can be transmitted based on the first determination and the second determination.

A second aspect of the present disclosure provides an apparatus comprising: at least one memory configured to store computer-readable program code to implement a secondary node for a user equipment operating in dual-connectivity with a master node and the secondary node; and at least one processing circuitry configured to access the at least one memory, and execute the computer-readable program code to cause the apparatus to at least: receive, from the master node, slice support information for one or more further nodes; and make a secondary node change determination at the secondary node, based on the slice support information.

In an implementation of the second aspect, the slice support information can identify supported slices of the one or more further nodes. The slice support information can identify at least one of at least one non-supported network slice of the one or more further nodes, or at least one communication session of the user equipment that is associated with at least one non-supported network slice. The secondary node can be a source secondary node of an earlier secondary node change procedure in which the one or more further nodes can include one or more target secondary nodes, and wherein the at least one processing circuitry can be configured to execute the computer-readable program code to cause the apparatus to further, during the earlier secondary node change procedure: transmit, to the master node, a secondary node change required message that can identify the one or more target secondary nodes, and wherein the apparatus caused to receive the slice support information includes wherein the apparatus caused to receive a secondary node change confirm message or a secondary node change refuse message that can include the slice support information, and the slice support information can identify at least one of at least one non-supported network slice of the one or more target secondary nodes, or at least one communication session of the user equipment that is associated with the at least one non-supported network slice. The secondary node change confirm message can be received, and the secondary node change confirm message can further indicate at least one of a cause of rejection of the at least one communication session by the one or more target secondary nodes, or an action taken by the master node for the at least one communication session. The supported network slices of the one or more further nodes can be the supported network slices of a tracking area of a cell served by the one or more further nodes, and the slice support information can indicate the supported network slices. The at least one processing circuitry can be configured to execute the computer-readable program code to cause the apparatus to further at least: transmit, to the master node, a network interface setup request message that includes neighbor cell information indicating tracking areas of neighboring cells of one or more cells served by the secondary node, and the tracking areas exclude the tracking area of the cell served by the one or more further nodes, and wherein the apparatus caused to receive the slice support information can include the apparatus caused to receive a network interface setup response message or a network interface configuration update message that includes the apparatus caused to the slice support information.

A third aspect of the present disclosure provides a method comprising: receiving, at a master node for a user equipment operating in dual-connectivity with the master node and a secondary node, information that indicates supported network slices of one or more further nodes; and transmitting slice support information for the one or more further nodes, from the master node to the secondary node, based on the information.

In an implementation of the third aspect, the slice support information can identify the supported slices of the one or more further nodes. The method can further comprise determining at least one communication session of the user equipment that is associated with at least one non-supported network slice of the one or more further nodes, based on the supported network slices, and wherein the slice support information can identify at least one of the at least one communication session or the at least one non-supported network slice. The secondary node can be a source secondary node of a secondary node change procedure in which the one or more further nodes can include one or more target secondary nodes, and wherein the method can further comprise during the secondary node change procedure: receiving, at the master node from the source secondary node, a secondary node change required message that can identify the one or more target secondary nodes; and determining at least one communication session of the user equipment that is associated with at least one non-supported network slice of the one or more target secondary nodes, based on the supported network slices, and transmitting the slice support information can include transmitting a secondary node change confirm message or a secondary node change refuse message that can include the slice support information, and the slice support information can identify at least one of the at least one communication session or the at least one non-supported network slice. The secondary node change confirm message can be transmitted, and the secondary node change confirm message can further indicate at least one of a cause of rejection of the at least one communication session by the one or more target secondary nodes, or an action taken by the master node for the at least one communication session. The supported network slices of the one or more further nodes can be the supported network slices of a tracking area of a cell served by the one or more further nodes, and wherein the slice support information can indicate the supported network slices. The method can further comprise: receiving, at the master node from the secondary node, a network interface setup request message that can include neighbor cell information indicating tracking areas of neighboring cells of one or more cells served by the secondary node; making a first determination that the secondary node is unaware of the tracking area, and thereby unaware of the supported network slices of the one or more further nodes; and making a second determination that the one or more further nodes is a neighbor of the secondary node, and wherein the slice support information can be transmitted based on the first determination and the second determination.

A fourth aspect of the present disclosure provides a method comprising: receiving, at a secondary node from a master node for a user equipment operating in dual-connectivity with the master node and the secondary node, slice support information for one or more further nodes; and making a secondary node change determination at the secondary node, based on the slice support information.

In an implementation of the fourth aspect, the slice support information can identify supported slices of the one or more further nodes. The slice support information can identify at least one of at least one non-supported network slice of the one or more further nodes, or at least one communication session of the user equipment that is associated with at least one non-supported network slice. The secondary node can be a source secondary node of a secondary node change procedure in which the one or more further nodes can include one or more target secondary nodes, and wherein the method can further comprise during the earlier secondary node change procedure: transmitting, from the source secondary node to the master node, a secondary node change required message that identifies the one or more target secondary nodes, and receiving the slice support information includes receiving a secondary node change confirm message or a secondary node change refuse message that includes the slice support information, and the slice support information identifies at least one of at least one non-supported network slice of the one or more target secondary nodes, or at least one communication session of the user equipment that is associated with the at least one non-supported network slice. The secondary node change confirm message can be received, and the secondary node change confirm message can further indicate at least one of a cause of rejection of the at least one communication session by the one or more target secondary nodes, or an action taken by the master node for the at least one communication session. The supported network slices of the one or more further nodes can be the supported network slices of a tracking area of a cell served by the one or more further nodes, and wherein the slice support information can indicate the supported network slices. The method can further comprise: transmitting, from the secondary node to the master node, a network interface setup request message that includes neighbor cell information indicating tracking areas of neighboring cells of one or more cells served by the secondary node, and the tracking areas exclude the tracking area of the cell served by the one or more further nodes, and receiving the slice support information includes receiving a network interface setup response message or a network interface configuration update message that includes the slice support information.

A fifth aspect of the present disclosure provides an apparatus comprising means for performing the method of any of the third or fourth aspects.
A sixth aspect of the present disclosure provides a computer-readable medium comprising computer-readable program code that, in response to execution by at least one processing circuitry, causes an apparatus to perform the method of any of the third or fourth aspects.

These and other features, aspects, and advantages of the present disclosure will be apparent from a reading of the following detailed description together with the accompanying figures, which are briefly described below. The present disclosure includes any combination of two, three, four or more features or elements set forth in this disclosure, regardless of whether such features or elements are expressly combined or otherwise recited in a specific example implementation described herein.

It will therefore be appreciated that this Brief Summary is provided merely for purposes of summarizing some example implementations so as to provide a basic understanding of some aspects of the disclosure. Accordingly, it will be appreciated that the above described example implementations are merely examples and should not be construed to narrow the scope of the disclosure in any way. Other example implementations, aspects and advantages will become apparent from the following detailed description taken in conjunction with the accompanying figures which illustrate, by way of example, the principles of some described example implementations.

### BRIEF DESCRIPTION OF THE FIGURE(S)

Having thus described example implementations of the disclosure in general terms, reference will now be made, by way of example only, to the accompanying figures, which are not necessarily drawn to scale, and wherein:
FIG. 1 illustrates a telecommunications system that includes one or more public land mobile networks (PLMNs) coupled to one or more external data networks, according to some example implementations of the present disclosure;
FIG. 2 illustrates an example of dual connectivity with the 5G core network, including a user equipment (UE), master node (MN) and secondary node (SN), according to some example implementations;
FIG. 3 illustrates an SN-initiated SN change procedure between the UE, the MN, the SN as a source secondary node (S-SN), and a target SN (T-SN), according to some example implementations;
FIGS. 4, 5, 6A and 6B are signaling charts that illustrate a flow of signals or information between a UE, MN, S-SN and T-SN, according to various example implementations;
FIGS. 7A, 7B, 7C, 7D, 7E and 7F are flowcharts that illustrate various operations in a method, according to some example implementations;
FIGS. 8A and 8B are flowcharts that illustrate various operations in another method, according to some example implementations;
FIG. 9 illustrates an apparatus according to some example implementations.

### DETAILED DESCRIPTION

Some implementations of the present disclosure will now be described more fully hereinafter with reference to the accompanying figures, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art. Like reference numerals refer to like elements throughout.

Unless specified otherwise or clear from context, references to first, second or the like should not be construed to imply a particular order. A feature described as being above another feature (unless specified otherwise or clear from context) may instead be below, and vice versa; and similarly, features described as being to the left of another feature else may instead be to the right, and vice versa. Also, while reference may be made herein to quantitative measures, values, geometric relationships or the like, unless otherwise stated, any one or more if not all of these may be absolute or approximate to account for acceptable variations that may occur, such as those due to engineering tolerances or the like.

As used herein, unless specified otherwise or clear from context, the "or" of a set of operands is the "inclusive or" and thereby true if and only if one or more of the operands is true, as opposed to the "exclusive or" which is false when all of the operands are true. Thus, for example, "[A] or [B]" is true if [A] is true, or if [B] is true, or if both [A] and [B] are true. Further, the articles "a" and "an" mean "one or more," unless specified otherwise or clear from context to be directed to a singular form. Furthermore, it should be understood that unless otherwise specified, the terms "data," "content," "digital content," "information," and similar terms may be at times used interchangeably. The term "network" may refer to a group of interconnected computers including clients and servers; and within a network, these computers may be interconnected directly or indirectly by various means including via one or more switches, routers, gateways, access points or the like.

Reference may be made herein to terms specific to a particular system, architecture or the like, but it should be understood that example implementations of the present disclosure may be equally applicable to any of a number of systems, architectures and the like. For example, reference may be made to 3GPP technologies such as Global System for Mobile Communications (GSM), UMTS, LTE, LTE Advanced and 5G NR; however, it should be understood that example implementations of the present disclosure may be equally applicable to non-3GPP technologies such as IEEE 802, Bluetooth and Bluetooth Low Energy.

Further, as used in this application, the term "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); or (c) hardware circuit(s) and/or processor(s), such as a microprocessor(s) or a portion of a microprocessor(s), that requires software (e.g., firmware) for operation, but the software may not be present when it is not needed for operation.

The above definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

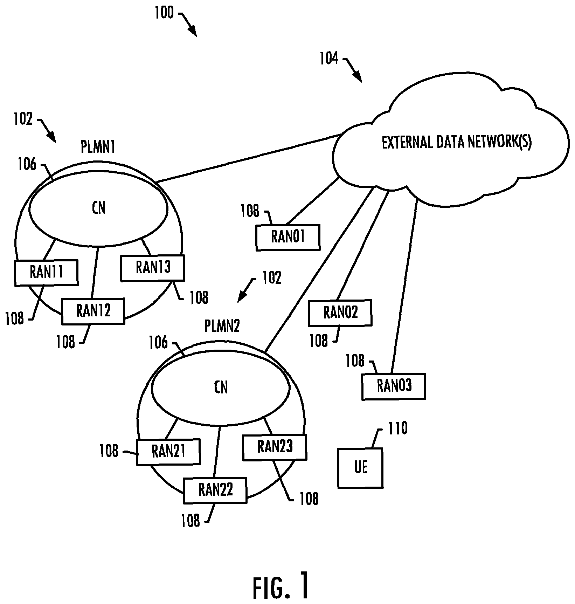

FIG. 1 illustrates a telecommunications system **100** according to various example implementations of the present disclosure. The telecommunications system generally includes one or more telecommunications networks. As shown, for example, the system includes one or more public land mobile networks (PLMNs) **102** coupled to one or more other external data networks **104** - notably including a wide area network (WAN) such as the Internet. Each of the PLMNs includes a core network (CN) **106** backbone such as the Evolved Packet Core (EPC) of LTE, the 5G core network (5GC) or the like; and each of the core networks and the Internet are coupled to one or more radio access networks (RANs) **108,** air interfaces or the like that implement one or more radio access technologies (RATs). As used herein, a "network device" refers to any suitable device at a network side of a telecommunications network. Examples of suitable network devices are described in greater detail below.

In addition, the system includes one or more radio units that may be varyingly known as user equipment (UE) **110,** terminal device, terminal equipment, mobile station or the like. The UE is generally a device configured to communicate with a network device or a further UE in a telecommunication network. The UE may be a portable computer (e.g., laptop, notebook, tablet computer), mobile phone (e.g., cell phone, smartphone), wearable computer (e.g., smartwatch), or the like. In other examples, the UE may be an Internet of things (IoT) device, an industrial IoT (IIoT device), a vehicle equipped with a vehicle-to-everything (V2X) communication technology, or the like. In operation, these UEs may be configured to connect to one or more of the RANs **108** according to their particular radio access technologies to thereby access a particular core network of a PLMN **102,** or to access one or more of the external data networks **104** (e.g., the Internet). The external data network may be configured to provide Internet access, operator services, 3rd party services, etc. For example, the International Telecommunication Union (ITU) has classified 5G mobile network services into three categories: enhanced mobile broadband (eMBB), ultra-reliable and low-latency communications (URLLC), and massive machine type communications (mMTC) or massive internet of things (MIoT).

Examples of radio access technologies include 3GPP radio access technologies such as GSM, UMTS, LTE, LTE Advanced, and 5G NR. Other examples of radio access technologies include IEEE 802 technologies such as IEEE 802.11 (Wi-Fi), IEEE 802.15 (including 802.15.1 (WPAN/Bluetooth), 802.15.4 (Zigbee) and 802.15.6 (WBAN)), Bluetooth, Bluetooth Low Energy (BLE), ultra wideband (UWB), and the like. Generally, a radio access technology may refer to any 2G, 3G, 4G, 5G or higher generation mobile communication technology and their different versions, as well as to any other wireless radio access technology that may be arranged to interwork with such a mobile communication technology to provide access to the core network of a mobile network operator (MNO).

In various example, a RAN **108** may be configured as one or more macrocells, microcells, picocells, femtocells or the like. The RAN may generally include one or more radio access nodes that are configured to interact with UEs **110.** In various examples, a radio access node may be referred to as a base station (BS), access point (AP), base transceiver station (BTS), Node B (NB), evolved NB (eNB), macro BS, NB (MNB) or eNB (MeNB), home BS, NB (HNB) or eNB (HeNB), next generation NB (gNB), next generation eNB (ng-eNB), or the like. Some type of network controlling/governing entity responsible for control of the radio access nodes. The network controlling/governing entity and radio access node may be separate or integrated into a single apparatus. The network controlling/governing entity may include processing circuity configured to carry out various management functions, etc. The processing circuity may be associated with a computer-readable storage medium or database for maintaining information required in the management functions.

A RAN **108** may be centralized or distributed. In various examples, components of a RAN may be interconnected by Ethernet, Gigabit Ethernet, Asynchronous Transfer Mode (ATM), optical fiber, dark fiber, passive wavelength division multiplexing (WDM), WDM passive optical network (WDM-PON), optical transport network (OTN), time sensitive networking (TSN) and/or any other data link layer network, possibly including radio links. The RAN may be connected to a CN **106** through one or more gateways, network functions or the like.

As will be appreciated, a PLMN **102** may be deployed in a number of different manners. In a 4G LTE deployment, the EPC **202** is the CN **106,** and the evolved UMTS terrestrial radio access network (E-UTRAN) **204** is the RAN **108;** and the E-UTRAN includes one or more eNBs (radio access nodes) configured connect UEs **110** to the E-UTRAN to thereby access the EPC. Similarly, in a 5G deployment, the 5GC is the CN, and the next generation (NG) radio access network (NG-RAN) is the RAN; and the NG-RAN includes one or more gNBs (radio access nodes) configured connect UEs to the NG-RAN to thereby access the 5GC. The term 'gNB' in 5G may correspond to the eNB in 4G LTE. These are considered standalone (SA) deployments of 4G LTE and 5G. Other deployments combine 4G LTE and 5G technologies, and are referred to as non-standalone (NSA) deployments. In some deployments, the E-UTRAN includes one or more ng-eNBs that are configured to communicate with the 5GC, and that may also be configured to communicate with one or more gNBs. Similarly, in another deployment, the NG-RAN may include one or more en-gNBs that are configured to communicate with the EPC, and that may also be configured to communicate with one or more eNBs.

In radio communications, node operations may in be carried out, at least partly, in a central/centralized unit (CU), such as a server, host or node, operationally coupled to a distributed unit (DU), such as a radio head/node. It is also possible that node operations may be distributed among a plurality of servers, hosts or nodes. It should also be understood that the distribution of work between CN **106** operations and radio access node (RAN **108)** operations may vary depending on implementation. Thus, a 5G network architecture may be based on a so-called CU-DU split. One gNB-CU (central node) may control one or more gNB-DUs. The gNB-CU may control a plurality of spatially separated gNB-DUs, acting at least as transmit/receive (Tx/Rx) nodes. In some example implementations, however, the gNB-DUs (also called DU) may include, for example, a radio link control (RLC), medium access control (MAC) layer and a physical (PHY) layer, whereas the gNB-CU (also called a CU) may include the layers above the RLC layer, such as a packet data convergence protocol (PDCP) layer, a radio resource control (RRC), and an internet protocol (IP) layer. Other functional splits are also possible. It is considered that skilled person is familiar with the OSI model and the functionalities within each layer.

In some example implementations, the server or CU may generate a virtual network through which the server communicates with the radio node. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU, and the boundary where the responsibility is shifted between the CU and the DU may be selected according to implementation.

In various instances, a single UE **110,** a dual-mode or multimode UE, may support multiple (two or more) RANs-thereby being configured to connect to multiple RANs. For example, a particular UE may support both LTE and 5G NR radio access technologies. In this regard, a number of deployments support dual connectivity (DC), and in some particular examples multi-radio dual connectivity (MR-DC), in which a UE may be configured to connect to two different radio access nodes connected via a non-ideal backhaul, one of the radio access nodes providing NR access and the other radio access node providing either E-UTRA or NR access. In these deployments, one radio access node may act as a master node (MN) and the other may act as a secondary node (SN). The MN functions as the controlling entity that provides control plane connection to the CN **106,** and utilizes the SN for additional resources to the UE. Related to dual connectivity, a secondary cell group (SCG) refers to a group of serving cells associated with the SN, and the SCG includes primary cell referred to as the primary secondary cell (PSCell).

E-UTRAN supports dual connectivity via E-UTRA-NR dual connectivity (EN-DC), in which a UE is connected to one eNB that acts as a MN and one en-gNB that acts as a SN. NG-RAN supports dual connectivity in a number of different manners. In NG-RAN E-UTRA-NR dual connectivity (NGEN-DC), a UE is connected to one ng-eNB that acts as a MN and one gNB that acts as a SN. In NR-E-UTRA dual connectivity (NE-DC), a UE is connected to one gNB that acts as a MN and one ng-eNB that acts as a SN. And in NR-NR dual connectivity (NR-DC), a UE is connected to one gNB that acts as a MN and another gNB that acts as a SN.

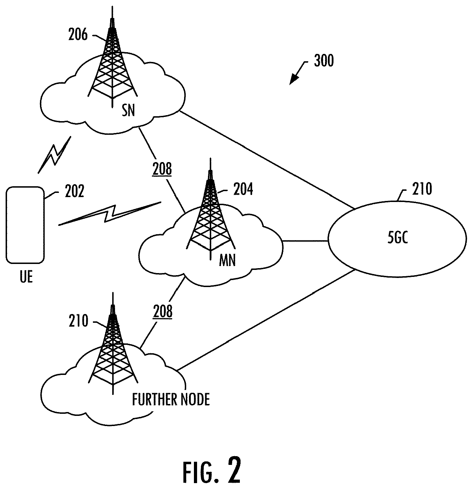

FIG. 2 illustrates an example of dual connectivity with the 5GC, according to some example implementations. More particularly, FIG. 2 illustrates a deployment **200** including a UE **202** connected to a MN **204** and a SN **206,** one of which provides NR access and the other of which provides either E-UTRA or NR access. The MN and SN are connected via a network interface **208,** such as an Xn interface, and at least the MN is connected to the 5GC **210.** More information regarding the Xn interface in particular may be found in 3GPP Technical Specification (TS) 38.423: "NG-RAN; Xn Application Protocol (XnAP) (Release 17)," v.17.5.0 (2023-06).

When a UE **202** registers to the 5GC **210,** the UE can communicate with an external data network via one or more communication sessions, referred to in 5G NR as packet data unit (PDU) sessions, which are data paths established from the UE through the 5GC to the external data network. In the case of dual connectivity, these communication sessions may be served by the MN **204** and SN **206.** In some examples, then, the MN may be referred to as a serving MN, and the SN may be referred to as a serving SN.

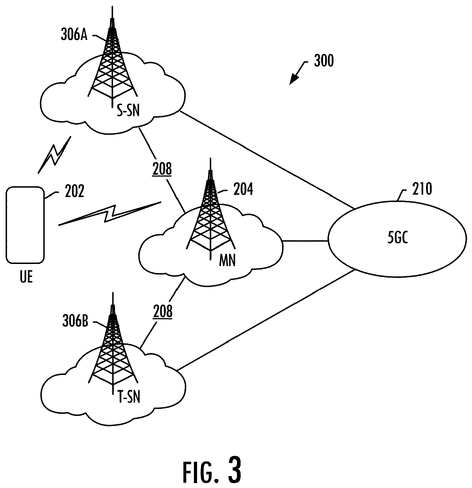

Based on several inputs taken into account such as measurements from the UE **202,** a PSCell change can be triggered by the MN **204** or the SN **206.** The former may be referred to as an MN-initiated PSCell change, whereas the latter may be referred to as an SN-initiated PSCell change. As shown in FIG. 3, for example, an SN-initiated SN change procedure may be used to transfer a UE context from a source SN (S-SN) **306A** to a target SN (T-SN) **306B,** and to change the SCG configuration in the UE from the S-SN to the T-SN. As also shown in FIG. 3, similar to the S-SN, the MN and T-SN may be connected via a network interface **208** (e.g., Xn interface).

Furthermore, an SN-initiated conditional SN change procedure may be used for inter-SN conditional PSCell change (CPC) configuration and inter-SN CPC execution. The SN-initiated conditional SN change procedure may also be initiated by the S-SN **306A,** to modify the existing SN initiated inter-SN CPC configuration, or to trigger the release of a candidate (target) SN by cancellation of all the prepared PSCells at the candidate SN and releasing the CPC related UE context at the candidate SN. More information regarding various SN change procedures may be found in 3GPP TS 37.340: "Evolved Universal Terrestrial Radio Access (E-UTRA) and NR; Multi-connectivity; Stage-2 (Release 17)," v.17.5.0 (2023-06).

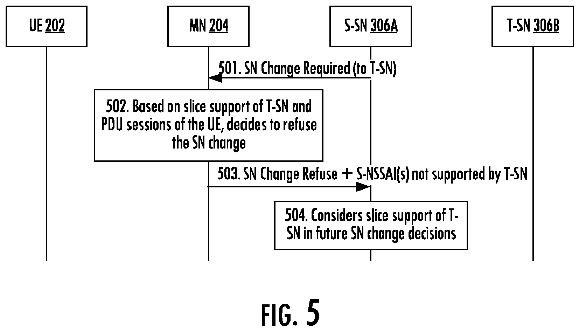

Briefly returning to FIG. 2, 5G NR also supports network slices, which are end-to-end logical networks that support a certain set of network functions. As such, a network slice is a logical network infrastructure which provides specific network capabilities and network characteristics. Across a 5G NR network, comprising a plurality of network slices, particular network slices may be configured to support particular features (e.g., hardware specifications, network functions, domain access, etc.) that are not common to all network slices. A UE **202** may be configured to access multiple network slices over a MN **204** and SN **206,** and communication session(s) of the UE may be established in these network slices. As used herein, the terms "network slice," "slice," and similar terms may be used interchangeably to refer to an end-to-end logical communication network, or portion thereof, within a PLMN or another network.

Network slicing incorporates the concept of allowing differentiated treatment of UEs dependent on each customer's particular requirements. Thus, network slicing makes it possible for MNOs to consider customers as belonging to different tenant types with each tenant type having respective service requirements. The service requirements of a particular tenant group are governed in accordance with respect to the network slice types associated with each tenant type. A UE belonging to a particular tenant type is eligible to use network slices specified according to their respective service level agreement (SLA) and subscriptions.

Network slices may be configured to differ either in their service requirements, such as eMBB or URLLC, or via the tenant that provides those particular services. Network slice support may be assumed to be uniform in a tracking area (TA) such that all the cells in a TA have the same network slice support. A registration area (RA) is a list of TAs that support the same network slices from a UE perspective. When a UE registers to the 5GC, the UE may indicate the network slices for access via requested single network slice selection assistance information (S-NSSAI), which uniquely identifies a network slice. Current 3GPP specifications allow a UE to be simultaneously connected and served by at most eight network slices associated with eight S-NSSAIs. On other hand, each cell may support tens or even hundreds of S-NSSAIs. In the current specifications, a TA may have a support up to 1024 network slices. More information regarding network slicing may be found in 3GPP TS 38.300: "NR; NR and NG-RAN Overall Description; Stage 2 (Release 17)," v.17.5.0 (2023-06).

As explained above, a serving SN **206** (which is a S-SN **306A** for a PSCell / SN change) may initiate an inter-SN PSCell change (SN change) based on measurements received from the UE **202,** which may indicate a better possible radio connectivity with another cell of another readio access node. The SN may either trigger an SN change procedure or a conditional SN change procedure.

For an SN change procedure, the message sent from the S-SN **306A** to the MN **204** to initiate an SN change may identify a T-SN **306B** so that the MN may contact and prepare the T-SN. For a conditional SN change procedure, S-SN may identify multiple T-SNs (at times referred to as candidate T-SNs, or more simply candidate SNs). In both type of SN change procedures, the S-SN may receive a SN change confirm message that identifies communcation sessions of the UE **202** that are to be served by the prepared T-SN (handed over from the S-SN to the T-SN). For a conditional SN change procedure, the communication sessions may be identified for each of the prepared T-SNs. As described herein, unless otherwise indicated, reference to a "SN change procedure" may refer to a SN change procedure or a conditional SN change procedure.

When a T-SN **306B** is prepared, MN **204** may request the T-SN allocate resources for communication sessions (e.g., PDU sessions) of the UE **202.** When the communication sessions are associated with network slices, the T-SN may perform a slice-aware admission control to determine if the network slices are supported by the T-SN. And if any of the communication sessions are associated with non-supported network slices, the T-SN may reject or otherwise not admit those communication sessions. In this case, the MN may take over or drop the rejected communication sessions, depending on the MN's availability, e.g., congestion. The SN change confirm message received by the S-SN **306A,** however, does not identify the rejected / not admitted communcation sessions, since those communication sessions will not be served by the T-SN. The S-SN therefore may not know why some communication sessions of the UE are rejected by the T-SN.

Furthermore, a radio access node (whether it is MN **204** or SN **206)** may aim for maximum continuity of the ongoing communication sessions of a UE **202** during handover decisions. It may therefore be desirable for the T-SN **306B** to support the network slices in which those communication sessions are established. Given knowledge of the slice support of its neighbors, a S-SN **306A** in a handover decision may prioritize those of its neighbors that support the network slices of the UE's ongoing communication sessions. In case of single-connectivity, neighboring nodes are informed of each other's slice support over a network interface (e.g., Xn interface) that connects the nodes. In case of dual connectivity, there is no guarantee that the S-SN and T-SN are connected by a network interface; and therefore, there is no guarantee that the S-SN is informed of the slice support of a T-SN. Consequently, SN-initiated SN change decisions may not be optimally performed by a S-SN, as the S-SN may lack information about the slice support of a T-SN.

In view of the foregoing, and returning to FIG. 2, example implementations of the present disclosure provide a mechanism to provide a SN **206** with information that indicates network slice support of one or more further nodes **210** (radio access nodes), to assist the SN in decisions for SN-initiated SN changes. In this regard, SN-initiated SN change decisions may become more efficient and successful, with fewer communication sessions (e.g., PDU sessions) of the UE **202** being rejected by a selected T-SN. This may also, in turn, lead to fewer communication sessions needing takeover by the MN **204.** The UE may therefore receive better service, with fewer interruptions.

Some example implementations of the present disclosure provide a MN **204** for a UE **202** operating in dual-connectivity with the MN and a SN **206.** The MN may be configured to receive information that indicates supported network slices of one or more further nodes **210,** which may include one or more T-SNs **306B** in a SN change procedure. In some examples, the MN is configured to receive this information during setup of a network interface **208** (e.g., Xn interface) between the MN and respective ones of the further node(s). The MN may be configured to transmit slice support information for the further node(s), to the SN, based on the information. In some examples including multiple further nodes, the MN may transmit slice support information for each of the multiple further nodes. The SN may then be configured to make a SN change determination, such as whether or not to initiate or proceed with a SN change procedure in which the SN is a S-SN **306A,** and the further node(s) include T-SN(s), based on the slice support information of the T-SN(s).

In various example implementations, the slice support information may identify the supported slices (e.g., S-NSSAI) of the further node(s) **210.** Additionally or alternatively, the slice support information may identify one or more non-supported slices of the further node(s). In some examples including multiple further nodes, the slice support information may indicate the supported network slices / non-supported network slice(s) for each of the multiple further nodes.

In some examples, the MN **204** is configured to determine at least one communication session (e.g., PDU session) of the UE **202** that is associated with at least one non-supported network slice of the further node(s) **210,** based on the supported network slices. In some of these examples, the slice support information indicates the non-supported network slice(s). In particular, for example, the slice support information may identify the non-supported network slice(s), such as by S-NSSAI. Additionally or alternatively, the slice support information may identify the communication session(s), such as by PDU session ID(s) in the case of PDU sessions. In this regard, the communication session(s) may include session parameters, and the session parameters include respective S-NSSAI that identify the non-supported network slice(s).

In some example implementations, the slice support information is transmitted during a SN change procedure in which the SN **206** is a S-SN **306A,** and the further node(s) **210** include T-SN(s) **306B.** During the SN change procedure, the MN **204** may be configured to receive a SN change required message from the S-SN that identifies the T-SN(s). The MN may determine at least one communication session of the UE **202** that is associated with at least one non-supported network slice of the T-SN(s), based on the supported network slices. The MN may then transmit a SN change confirm message that includes the slice support information, and the slice support information may indicate the non-supported network slice(s).

In some of the above examples, the communication session(s) associated with the non-supported network slice(s) is rejected by the T-SN(s) **306B,** and the slice support information identifies the communication session(s) rejected by the T-SN(s). In some further examples, the SN change confirm message may further indicate a cause of rejection of the communication session(s), and/or an action taken by the MN **204** for the communication session(s) rejected by the T-SN(s). In the case of an action taken, the MN may take an action such as to take over or drop the communication session(s) rejected by the T-SN(s). But the MN may otherwise continue with the SN change procedure, without the T-SN(s) serving the rejected communication session(s).

In other examples, the MN **204** may refuse a SN change requested by the S-SN **306A.** In this regard, the MN may receive a SN change required message from the S-SN **306A** identifying the T-SN(s) **306B,** and determine communication session(s) of the UE **202** that is associated with non-supported network slice(s) of the T-SN(s), based on the supported network slices. The MN may decide to refuse the SN change based on the non-supported network slice(s) and thereby rejected communication session(s). The MN may then transmit a SN change refuse message that includes the slice support information, and the slice support information may indicate the non-supported network slice(s). In this regard, the slice support information may identify communication session(s) rejected by the T-SN(s), associated with the non-supported network slice(s), and optionally also the cause of rejection of the communication session(s).

As indicated above, network slice support may be assumed to be uniform in a TA such that all the cells in a TA have the same network slice support. In some examples, then, the supported network slices of the further node(s) **210** may be the supported network slices of a TA of a cell(s) served by the further node(s). In some of these examples, the slice support information may indicate the supported and/or not-supported network slices. The supported and/or not-supported network slices may be indicated by at least one of the T-SN or the TA.

In some examples, during an earlier setup of the network interface **208** (e.g., Xn) interface between the MN **204** and SN **206,** the MN may receive a network interface setup request message the SN that includes neighbor cell information indicating TAs of neighboring cells of one or more cells served by the SN. The MN may make a first determination that the SN is unaware of the TA of a cell served by the further node(s) **210,** and thereby unaware of the supported network slices of the further node(s), such as based on the TAs in the neighbor cell information excluding the TA of the cell served by the further node(s) **210.**

The MN **204** may then make a second determination that the further node(s) **210** is a neighbor of the SN **206,** such as based on one or more of operations and management (OAM) configuration, measurements received from one or more UEs **202,** or previous history information of the UE(s). The MN may then transmit the slice support information based on the first determination and the second determination. In some examples, the slice support information is transmitted in a network interface setup response message. In other examples, the the slice support information may be transmitted in a network interface configuration update message.

Example implementations of the present disclosure described above from the perspective of the MN **204** apply equally to the SN **206.** In this regard, information or messages that are from the perspective of the MN, received from or transmitted to the SN, may instead be from the perspective of the SN, transmitted to or received from the MN.

Example implementations of the present disclosure therefore also provide a SN **206** for a UE **202** operating in dual-connectivity with a MN **204** and the SN. In some of these example implementations, the SN may receive, from the MN, slice support information for one or more further nodes **210.** The slice support information may be received during an earlier SN change procedure initiated at the SN (as a S-SN **306A),** such as in a manner described above. The SN may then make a SN change determination based on the slice support information received from the MN, such as whether or not to initiate or proceed with a SN change procedure. During this SN change procedure, the SN (again as S-SN) may select the further node(s), or a second one or more further nodes, as one or more T-SNs **306B,** based on the slice support information. And the S-SN may transmit, to the MN or a second MN, a SN change required message that identifies the T-SN(s).

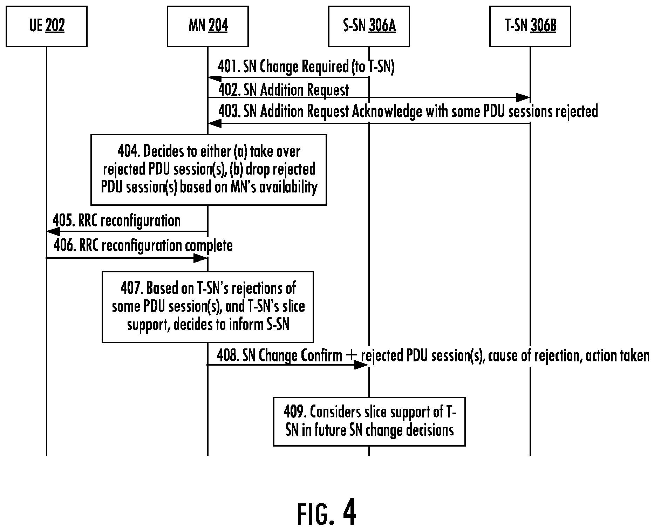

Reference is now made to FIGS. 4, 5, 6A and 6B, which are signaling charts that illustrate a flow of signals or information between a UE **202,** MN **204,** S-SN **306A** and T-SN **306B,** according to various example implementations. In this regard, FIGS. 4 and 5 are signaling charts of at least a portion of a SN-initiated SN change procedure, according to some example implementations.

In FIG. 4, the S-SN **306A** decides to change the serving PSCell of the UE **202** to a cell served by a T-SN **306B.** The S-SN, at step **401,** initiates a SN change procedure by sending a SN change required message, which contains an identifier (ID) of the T-SN. At steps **402** and **403,** the MN **204** requests the T-SN to allocate resources for the UE by means of an SN addition procedure, and the T-SN accepts the request with some PDU sessions of the UE rejected (not admitted) due to lack of slice support by the T-SN. The MN, at step **404,** decides to either take over the rejected PDU sessions (i.e., serve by the MN), or drop the rejected PDU sessions, such as when the MN lacks capacity to serve the rejected PDU sessions.

At steps **405** and **406,** the MN **204** triggers the UE **202** to apply a new configuration. The MN may indicate the new configuration to the UE in a MN RRC reconfiguration message including a SN RRC reconfiguration message generated by the T-SN **306B.** The UE applies the new configuration and sends a MN RRC reconfiguration complete message. In case the UE is unable to comply with (part of) the configuration included in the MN RRC reconfiguration message, the UE may perform a reconfiguration failure procedure.

At step **407,** based on the rejection of at least one PDU session by the T-SN **306B,** and knowing that the PDU session(s) is rejected due to a lack of slice support by the T-SN, the MN **204** may decide to provide the S-SN 306A with information about the rejection. At step **408,** the MN **204** confirms the change of the S-SN **306A** in a SN change confirm message, in which the MN identifies the PDU session(s) rejected by the T-SN. The SN change confirm message may also indicate the cause of the rejection being lack of slice support at the T-SN, and/or an taken action for the PDU session(s) (e.g., taken over by MN, dropped).

Reception of the SN change confirm message may trigger the S-SN **306A** to stop providing user data to the UE **202.** The S-SN may also consider the slice support of the T-SN **306B** in future SN change decisions, as shown at step **409.** In particular, for example, the S-SN may not prioritize the T-SN over other possible SNs in case some slices of a UE are not supported by the T-SN. In some examples, further signaling may occur between the MN **204,** S-SN and T-SN to complete the SN change procedure, in a manner as described in 3GPP TS 37.340.

In FIG. 5, similar to FIG. 4, the S-SN **306A** may decide to change the serving PSCell of the UE **202** to a cell served by a T-SN **306B.** The S-SN, at step 5**01,** initiates a SN change procedure by sending a SN change required message, which contains an ID of the T-SN. At step **502,** as the MN **204** already knows the slice support of the T-SN, the MN determines that at least one PDU session (or multiple PDU sessions) of the UE **202** cannot be transferred to the T-SN due to lack of slice support. The MN decides to refuse the SN change to the T-SN. At step **503,** the MN sends a SN change refuse message to the S-SN. In the SN change refuse message, the MN may include information on network slices that are not supported by the T-SN, such as one or more S-NSSAIs of one or more non-supported slices of the T-SN. At step **504,** the S-SN may consider the slice support of the T-SN in future SN change decisions (e.g., the S-SN may not prioritize the T-SN over other possible SNs based on T-SN's slice support).

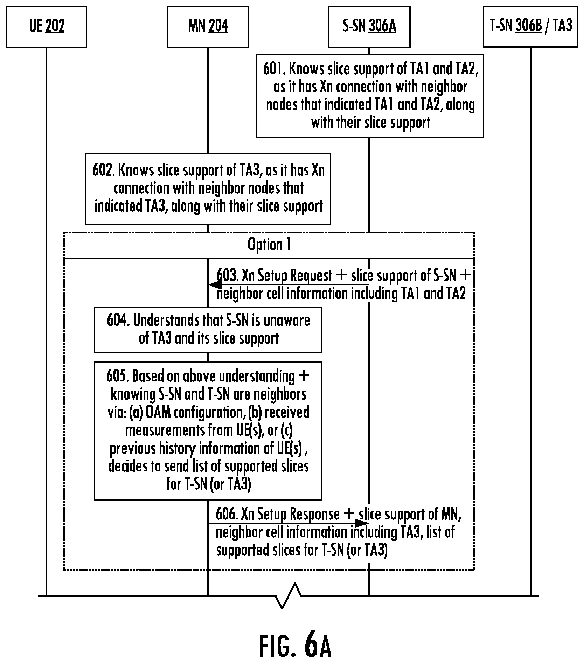

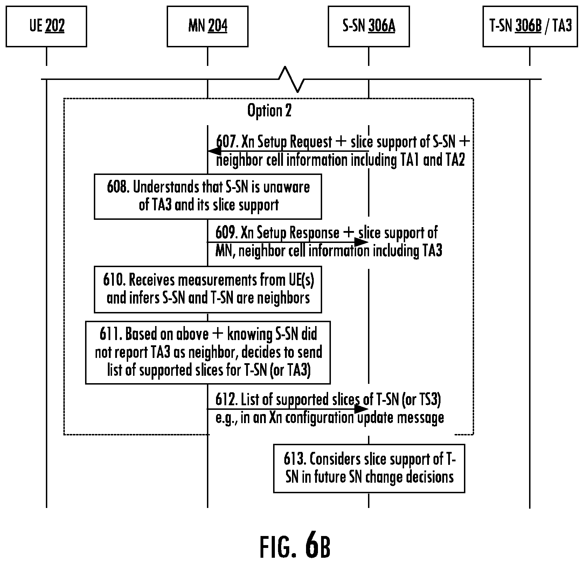

FIGS. 6A and 6B are signaling charts that include an Xn interface setup between the MN **204** and a SN **206** (shown for illustrative purposes as S-SN **306A**), according to some example implementations. At step **601** of FIG. 6A, the S-SN knows the slice support of a first TA (TA1) and a second TA (TA2), as the S-SN has some previous Xn connection with neighbor radio access nodes (e.g., gNBs) that indicated TA1 and TA2, including the slice support of TA1 and TA2. Similarly, at step **602,** the MN **204** knows the slice support of a third TA (TA3) as the MN has an Xn connection with neighbor radio access nodes that indicated TA3, including the slice support of TA3. And in some examples, TA3 includes a cell served by one or more further nodes **210** (shown for illustrative purposes as T-SN **306B).**

In a first option, at step **603,** the S-SN **306A** initiates an Xn setup procedure by sending an Xn setup request message to the MN **204** (although the Xn setup request message may be sent from the MN to the S-SN). The Xn setup request message includes slice support of the S-SN, and neighbor cell information including TA1 and TA2. At step **604,** the MN determines from the neighbor cell information that the S-SN is unaware of TA3 (including T-SN **306B)** and its slice support. Based on this, and a second determination that the S-SN and T-SN are neighbors, at step **605,** the MN decides to send a list of supported slices of T-SN (or TA3) to the S-SN. As shown, the MN may decide the S-SN and T-SN are neighbors based on at least one of OAM configuration, received measurements from UE(s), or previous history information of UE(s). The MN, at step **606,** replies to the Xn setup request message with an Xn setup response message. Similar to the Xn setup request message from the S-SN, the Xn setup response message from the MN includes slice support of the MN, and neighbor cell information including TA3. The Xn setup response message also includes the list of supported slices of T-SN (or TA3).

In a second option, at step **607,** shown in FIG. 6B, the S-SN **306A** initiates an Xn setup procedure by sending an Xn setup request message to the MN **204** (although the Xn setup request message may be sent from the MN to the S-SN). The Xn setup request message includes slice support of the S-SN, and neighbor cell information including TA1 and TA2. At step **608,** the MN determines from the neighbor cell information that the S-SN is unaware of TA3 (including T-SN **306B)** and its slice support. At step **609,** the MN replies to the Xn setup request message with an Xn setup response message, including slice support of the MN, and neighbor cell information including TA3.

At some later point in time, at step **610,** the MN **204** receives measurements from one or more UEs **202** that show the S-SN **306A** and T-SN cells may be neighbors (e.g., based on pattern of signal increase/decrease reported by the same UE). The MN infers or otherwise determines that the S-SN and T-SN **306B** are neighbors based on the measurements, and knowing the S-SN did not report TA3 as a neighbor, the MN at step **611** decides to send a list of supported slices of T-SN (or TA3) to the S-SN. At step **612,** in a message such as an Xn configuration update to the S-SN, the MN includes the list of supported slices of T-SN (or TA3). At step **613,** following either the first option or the second option, the S-SN may consider supported slices of T-SN (or TA3) in future SN change decisions (e.g., the S-SN may not prioritize the T-SN over other possible SNs based on T-SN's slice support).

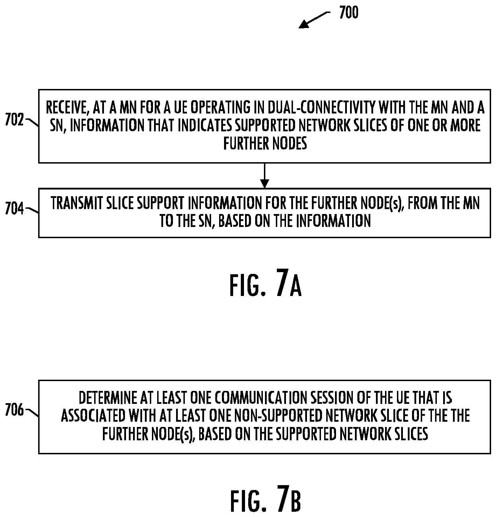

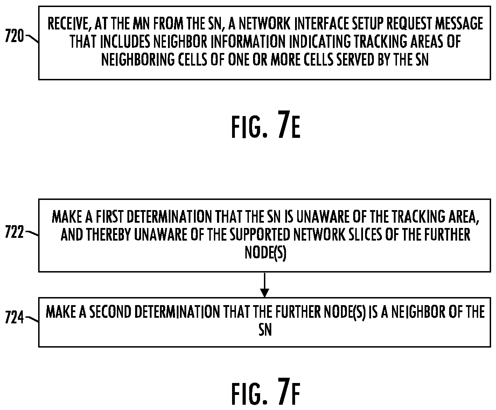

FIGS. 7A-7F are flowcharts that illustrate various operations in a method **700,** according to some example implementations. The method includes receiving, at a MN for a UE operating in dual-connectivity with the MN and a SN, information that indicates supported network slices of one or more further nodes (radio access nodes), as shown at block **702** of FIG. 7A. And the method includes transmitting slice support information for the further node(s), from the MN to the SN, based on the information, as shown at block **704.** The MN may generate the slice support information (to be transmitted) at least partly based on the received information that indicates supported network slices of one or more further nodes. In an example implementation, the slice support information identifies the supported slices of the further node(s) and/or wherein the slice support information identifies unsupported slices of the further node(s). The slice support information may identify the supported and/or unsupported slices for each of the further node(s) (e.g. node specifically). In an example implementation, the identification of the supported/unsupported slices may be conveyed to the SN by indicating communication session(s) of the UE that is/are associated with supported/unsupported network slices by the further node(s).

In some examples, the information that indicates the supported slices is received at block **702** during setup of a network interface between the MN and respective ones of the further node(s).

In some examples, the method **700** further includes determining at least one communication session of the UE that is associated with at least one non-supported network slice of the further node(s), based on the supported network slices, as shown at block **706** of FIG. 7B. In some of these examples, the slice support information transmitted at block **704** indicates the non-supported network slice(s).

In some examples, the slice support information is transmitted at block **704** during a SN change procedure in which the secondary node is a S-SN, and the one or more further nodes include one or more T-SNs, of a secondary node change procedure.

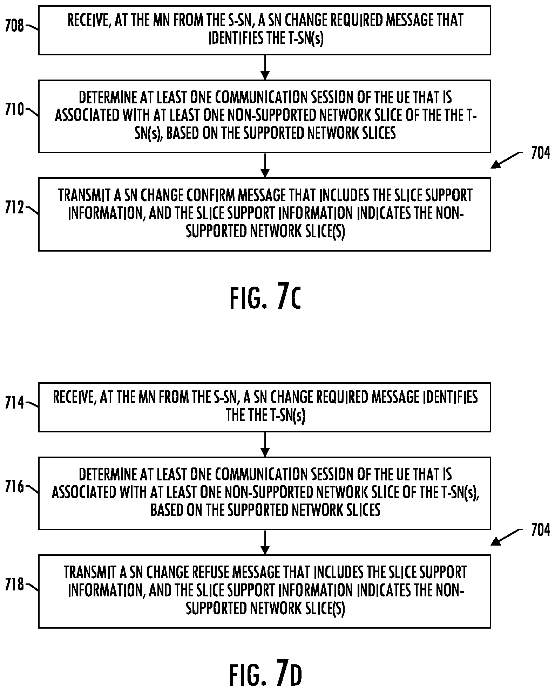

In some examples, the method **700** further includes, during the SN change procedure, receiving, at the MN from the S-SN, a SN change required message that identifies the T-SN(s), as shown at block **708** of FIG. 7C. The method includes determining at least one communication session of the UE that is associated with at least one non-supported network slice of the T-SN(s), based on the supported network slices, as shown at block **710.** In some of these examples, transmitting the slice support information at block **704** includes transmitting a SN change confirm message that includes the slice support information, and the slice support information indicates the non-supported network slice(s), as shown at block **712.**

In some examples, the method **700** further includes, during the SN change procedure, receiving, at the MN from the S-SN, a SN change required message identifies the T-SN(s), as shown at block **714** of FIG. 7D. The method includes determining at least one communication session of the UE that is associated with at least one non-supported network slice of the T-SN(s), based on the supported network slices, as shown at block **716.** In some of these exmaples, transmitting the slice support information at block **704** includes transmitting a SN change refuse message that includes the slice support information, and the slice support information indicates the non-supported network slice(s), as shown at block **718.**

In some examples, the supported network slices of the further node(s) are the supported network slices of a tracking area of a cell served by the further node(s). In some of these examples, the slice support information indicates the supported network slices. The supported network slices may be indicated by at least one of the further node(s) or the tracking area.

In some examples, the method **700** further includes receiving, at the MN from the SN, a network interface setup request message that includes neighbor cell information indicating tracking areas of neighboring cells of one or more cells served by the SN, as shown at block **720** of FIG. 7E.

In some examples, the method **700** further includes making a first determination that the SN is unaware of the tracking area, and thereby unaware of the supported network slices of the further node(s), as shown at block **722** of FIG. 7E. In some further examples, the first determination is made based on the tracking areas excluding the tracking area of the cell served by the further node(s).

As also shown, the method **700** includes making a second determination that the further node(s) is a neighbor of the SN, as shown at block **724.** In some more further examples, the second determination is made at block based on one or more of operations and management (OAM) configuration, measurements received from one or more UEs, or previous history information of the UE(s). The slice support information, then, may be transmitted at block **704** based on the first determination and the second determination. In some examples, the slice support information is transmitted in a network interface setup response message. In other examples, the slice support information is transmitted in a network interface configuration update message.

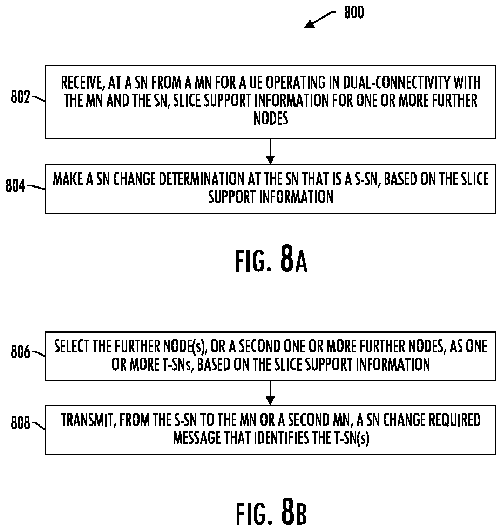

FIGS. 8A and 8B are flowcharts that illustrate various operations in a method **800,** according to some example implementations. The method includes receiving, at a SN from a MN for a UE operating in dual-connectivity with the MN and the SN, slice support information for one or more further nodes, as shown at block **802** of FIG. 8A. In some further examples, the slice support information is received during an earlier SN change procedure initiated at the SN, such as in a manner described above. In other examples, the slice support information is received during or in connection with setup of a network interface between the MN and the SN, such as in a network interface setup response message or a network interface configuration update message, as described above.

The method **800** includes making a SN change detemrination at the SN that is a S-SN, based on the slice support information, as shown at block **804** of FIG. 8A. In some examples, the method further includes, at the SN, during a SN change procedure, selecting the further node(s), or a second one or more further nodes, as one or more T-SNs, based on the slice support information, as shown at block **806** of FIG. 8B. And in some of these examples, the method includes transmitting, from the SN to the MN or a second MN, a SN change required message that identifies the T-SN(s), as shown at block **808.**

According to example implementations of the present disclosure, a telecommunications system **100** or PLMN **102,** and its components such as a UE **202,** MN **204,** SN **206,** further node **210,** S-SN **306A** and/or T-SN **306B,** may be implemented by various means. Means for implementing the system and its components may include hardware, alone or under direction of one or more computer programs from a computer-readable storage medium, such as computer memory (or more simply "memory"). In some examples, one or more apparatuses may be configured to function as or otherwise implement the system and its components shown and described herein. In examples involving more than one apparatus, the respective apparatuses may be connected to or otherwise in communication with one another in a number of different manners, such as directly or indirectly via a wired or wireless network or the like.

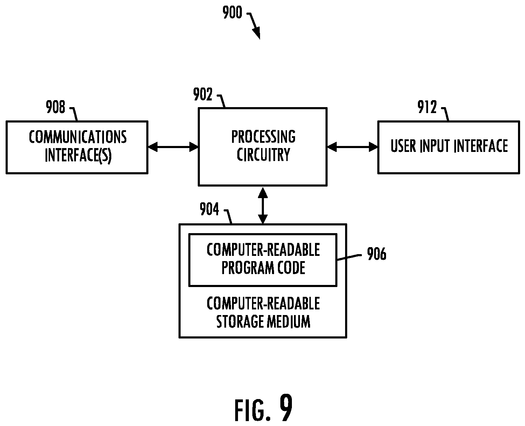

FIG. 9 illustrates an apparatus **900** according to some example implementations of the present disclosure. Generally, an apparatus of exemplary implementations of the present disclosure may comprise, include or be embodied in one or more fixed or portable electronic devices. The apparatus may include one or more of each of a number of components such as, for example, processing circuitry **902** connected to computer-readable storage medium **904.**

The processing circuitry **902** may be composed of one or more processors alone or in combination with one or more computer-readable storage media. The processing circuitry is generally any piece of computer hardware that is capable of processing information such as, for example, data, computer programs and/or other suitable electronic information. The processing circuitry is composed of a collection of electronic circuits some of which may be packaged as an integrated circuit or multiple interconnected integrated circuits (an integrated circuit at times more commonly referred to as a "chip"). The processing circuitry may be configured to execute computer programs, which may be stored onboard the processing circuitry or otherwise stored in the computer-readable storage medium **904** (of the same or another apparatus).

The processing circuitry **902** may be a number of processors, a multi-core processor or some other type of processor, depending on the particular implementation. Further, the processing circuitry may be implemented using a number of heterogeneous processor systems in which a main processor is present with one or more secondary processors on a single chip. As another illustrative example, the processing circuitry may be a symmetric multi-processor system containing multiple processors of the same type. In yet another example, the processing circuitry may be embodied as or otherwise include one or more ASICs, FPGAs or the like. Thus, although the processing circuitry may be capable of executing a computer program to perform one or more functions, the processing circuitry of various examples may be capable of performing one or more functions without the aid of a computer program. In either instance, the processing circuitry may be appropriately programmed to perform functions or operations according to example implementations of the present disclosure.

The computer-readable storage medium **904** is generally any piece of computer hardware that is capable of storing information such as, for example, data, computer programs (e.g., computer-readable program code **906)** and/or other suitable information either on a temporary basis and/or a permanent basis. The computer-readable storage medium may include volatile and/or non-volatile memory, and may be fixed or removable. Examples of suitable memory include random access memory (RAM), read-only memory (ROM), a hard drive, a flash memory, a thumb drive, a removable computer diskette, an optical disk or some combination of the above. The computer-readable storage medium is a non-transitory device capable of storing information, and is distinguishable from computer-readable transmission media such as electronic transitory signals capable of carrying information from one location to another. The term "non-transitory," as used herein, is a limitation of the medium itself (i.e., tangible, not a signal) as opposed to a limitation on data storage persistency (e.g., RAM versus ROM). Computer-readable medium as described herein may generally refer to a computer-readable storage medium or computer-readable transmission medium.

In addition to the computer-readable storage medium **904,** the processing circuitry **902** may also be connected to one or more interfaces for displaying, transmitting and/or receiving information. The interfaces may include a communications interface **908** and/or one or more user interfaces. The communications interface may be configured to transmit and/or receive information, such as to and/or from other apparatus(es), network(s) or the like. The communications interface may be configured to transmit and/or receive information by physical (wired) and/or wireless communications links. Examples of suitable communication interfaces include a network interface controller (NIC), wireless NIC (WNIC) or the like.

As indicated above, program code instructions may be stored in a computer-readable storage medium, and executed by processing circuitry that is thereby programmed, to implement functions of the systems, subsystems, tools and their respective elements described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, a processing circuitry or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processing circuitry or other programmable apparatus to configure the computer, processing circuitry or other programmable apparatus to execute operations to be performed on or by the computer, processing circuitry or other programmable apparatus.

Retrieval, loading and execution of the program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

Execution of instructions by a processing circuitry, or storage of instructions in a computer-readable storage medium, supports combinations of operations for performing the specified functions. In this manner, an apparatus **900** may include a processing circuitry **902** and a computer-readable storage medium **904** coupled to the processing circuitry, where the processing circuitry is configured to execute computer-readable program code **906** stored in the computer-readable storage medium. It will also be understood that one or more functions, and combinations of functions, may be implemented by special purpose hardware-based computer systems and/or processing circuitry which perform the specified functions, or combinations of special purpose hardware and program code instructions.

**Many** modifications and other implementations of the disclosure set forth herein will come to mind to one skilled in the art to which the disclosure pertains having the benefit of the teachings presented in the foregoing description and the associated figures. Therefore, it is to be understood that the disclosure is not to be limited to the specific implementations disclosed and that modifications and other implementations are intended to be included within the scope of the appended claims. Moreover, although the foregoing description and the associated figures describe example implementations in the context of certain example combinations of elements and/or functions, it should be appreciated that different combinations of elements and/or functions may be provided by alternative implementations without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus comprising:
means for receiving, at a master node for a user equipment operating in dual-connectivity with the master node and a secondary node, information that indicates supported network slices of one or more further nodes; and
means for transmitting slice support information for the one or more further nodes, from the master node to the secondary node, based on the information.

2. The apparatus of claim 1, wherein the slice support information identifies the supported slices of the one or more further nodes.

3. The apparatus of claim 1 or claim 2, wherein the apparatus further comprises means for determining at least one communication session of the user equipment that is associated with at least one non-supported network slice of the one or more further nodes, based on the supported network slices, and
wherein the slice support information identifies at least one of the at least one communication session or the at least one non-supported network slice.

4. The apparatus of any of claims 1 to 3, wherein the secondary node is a source secondary node of a secondary node change procedure in which the one or more further nodes include one or more target secondary nodes, and wherein the apparatus further comprises:
means for receiving, during the secondary node change procedure, at the master node from the source secondary node, a secondary node change required message that identifies the one or more target secondary nodes; and
means for determining at least one communication session of the user equipment that is associated with at least one non-supported network slice of the one or more target secondary nodes, based on the supported network slices, and
wherein the means for transmitting the slice support information includes means for transmitting a secondary node change confirm message or a secondary node change refuse message that includes the slice support information, and the slice support information identifies at least one of the at least one communication session or the at least one non-supported network slice.

5. The apparatus of claim 4, wherein the secondary node change confirm message is transmitted, and the secondary node change confirm message further indicates at least one of a cause of rejection of the at least one communication session by the one or more target secondary nodes, or an action taken by the apparatus for the at least one communication session.

6. The apparatus of any of claims 1 to 5, wherein the supported network slices of the one or more further nodes are the supported network slices of a tracking area of a cell served by the one or more further nodes, and
wherein the slice support information indicates the supported network slices.

7. The apparatus of claim 6, wherein the apparatus further comprises:
means for receiving, at the master node from the secondary node, a network interface setup request message that includes neighbor cell information indicating tracking areas of neighboring cells of one or more cells served by the secondary node;
means for making a first determination that the secondary node is unaware of the tracking area, and thereby unaware of the supported network slices of the one or more further nodes; and
means for making a second determination that the one or more further nodes is a neighbor of the secondary node, and
wherein the slice support information is transmitted based on the first determination and the second determination.

8. An apparatus comprising:
means for receiving, at a secondary node from a master node for a user equipment operating in dual-connectivity with the master node and the secondary node, slice support information for one or more further nodes; and
means for making a secondary node change determination at the secondary node, based on the slice support information, wherein the slice support information identifies supported slices of the one or more further nodes.

9. The apparatus of claim 8, wherein the slice support information identifies at least one of at least one non-supported network slice of the one or more further nodes, or at least one communication session of the user equipment that is associated with at least one non-supported network slice.

10. The apparatus of claim 8 or 9, the secondary node is a source secondary node of a secondary node change procedure in which the one or more further nodes include one or more target secondary nodes, and wherein the apparatus further comprises:
means for transmitting, during the secondary node change procedure, from the source secondary node to the master node, a secondary node change required message that identifies the one or more target secondary nodes, and
wherein the means for receiving the slice support information includes means for receiving a secondary node change confirm message or a secondary node change refuse message that includes the slice support information, and the slice support information identifies at least one of at least one non-supported network slice of the one or more target secondary nodes, or at least one communication session of the user equipment that is associated with the at least one non-supported network slice.

11. The apparatus of claim 10, wherein the secondary node change confirm message is received, and the secondary node change confirm message further indicates at least one of a cause of rejection of the at least one communication session by the one or more target secondary nodes, or an action taken by the master node for the at least one communication session.

12. The apparatus of any of claims 8 to 11, wherein the supported network slices of the one or more further nodes are the supported network slices of a tracking area of a cell served by the one or more further nodes, and
wherein the slice support information indicates the supported network slices.

13. The apparatus of claim 12, wherein the apparatus further comprises:
means for transmitting, from the secondary node to the master node, a network interface setup request message that includes neighbor cell information indicating tracking areas of neighboring cells of one or more cells served by the secondary node, and the tracking areas exclude the tracking area of the cell served by the one or more further nodes, and
wherein the means for receiving the slice support information includes means for receiving a network interface setup response message or a network interface configuration update message that includes the slice support information.

14. A method comprising:
receiving, at a master node for a user equipment operating in dual-connectivity with the master node and a secondary node, information that indicates supported network slices of one or more further nodes; and
transmitting slice support information for the one or more further nodes, from the master node to the secondary node, based on the information.

15. A method comprising:
receiving, at a secondary node from a master node for a user equipment operating in dual-connectivity with the master node and the secondary node, slice support information for one or more further nodes; and
making a secondary node change determination at the secondary node, based on the slice support information.
